# EUROPÄISCHE PATENTSCHRIFT

(11) **EP 3 832 173 B1**
(45) Veröffentlichungstag und Bekanntmachung des Hinweises auf die Patenterteilung: **01.03.2023**
(21) Anmeldenummer: 20210270.3
(22) Anmeldetag: 27.11.2020
(51) Int. Cl.: B32B 5/18, B32B 3/28, B32B 1/08, B29C 49/04, B29C 48/21, B32B 25/04, B29C 48/13, B29C 48/09, F16J 3/04, B29C 48/00

(54) **BALG, DESSEN VERWENDUNG UND VERFAHREN ZU SEINER HERSTELLUNG**
BELLOWS, USE OF SAME AND METHOD FOR PRODUCING SAME
SOUFFLET, SON UTILISATION ET SON PROCÉDÉ DE FABRICATION

(30) Priorität: 02.12.2019 DE 102019132692
(43) Veröffentlichungstag der Anmeldung: 09.06.2021
(73) Patentinhaber: Carl Freudenberg KG, 69469 Weinheim (DE)
(72) Erfinder: Schirmer, Stefan, 31275 Lehrte (DE); Knorr, Rainer, 10557 Berlin (DE)

(56) Entgegenhaltungen:
- DE-A1- 3 236 308
- DE-A1- 10 249 073
- DE-A1-102018 214 173
- DE-U1- 8 001 872
- US-B1- 6 386 551

## Beschreibung

### Technisches Gebiet

Die Erfindung betrifft einen Balg, dessen Verwendung und ein Verfahren zu seiner Herstellung.

Der Balg hat einen zumindest zweischichtigen Aufbau, umfassend zumindest eine erste Schicht und zumindest eine zweite Schicht, die herstellungsbedingt unlösbar miteinander verbunden sind, wobei die Schichten voneinander abweichende Dichten aufweisen.

### Stand der Technik

Bälge sind allgemein bekannt und bestehen häufig aus thermoplastischen Elastomeren. Die vorbekannten Bälge haben einen einschichtigen Aufbau und werden aus einem geblasenen Schlauch unter anderem durch Extrusionsblasformen hergestellt.

Durch den einschichtigen Aufbau kann ein Balg häufig nur unzureichend an die jeweiligen Gegebenheiten des Anwendungsfalles angepasst werden. Auch Teilbereiche eines einschichtigen Balgs bestehen zwangsläufig aus dem einen verwendeten Werkstoff, für die ein anderer Werkstoff vielleicht besser geeignet wäre, zum Beispiel hinsichtlich der Gebrauchseigenschaften, eines möglichst geringen Gewichts oder einer wirtschaftlicheren Herstellbarkeit. Insbesondere dann, wenn der verwendete Werkstoff teuer ist, wird auch der daraus hergestellte Balg teuer.

Aus der DE 102 49 073 A1 ist ein Balg, wie eingangs beschrieben, bekannt. Der vorbekannte Balg ist als Mehrschichtbalg ausgebildet, wobei jede Lage voneinander unterschiedliche Materialeigenschaften aufweist, dadurch wird ermöglicht, verschiedene, jeweils für sich optimierbare Materialien beispielsweise für den Innen- beziehungsweise Außenbereich eines Balgs einzusetzen. Der Innenbereich des Balgs kann demnach durch ein Material gebildet sein, das insbesondere elastisch sowie beständig gegenüber einem verwendeten Schmiermittel ist. Auf der Außenseite des Balgs wird demgegenüber ein Material verwendet, das besonders beständig gegen Umgebungseinflüsse wie beispielsweise UV-Licht, aggressive Medien oder Feuchtigkeit ist. Der Mehrschichtbalg umfasst eine Kernschicht und zumindest eine Hautschicht, wobei es sich bei der zumindest einen Hautschicht um eine äußere Schicht des Mehrschichtbalgs handelt. Die Mehrschichtigkeit wird als vorteilhaft erachtet, um qualitätsbestimmende Faktoren, beispielsweise Elastizität und Oberflächeneigenschaften, weitestgehend unabhängig voneinander optimieren zu können. Außerdem werden die geringen Kosten des Mehrschichtbalgs hervorgehoben. Der vorbekannte Mehrschichtbalg kann eine Kernschicht aus einem geschäumten Werkstoff aufweisen, um den Einsatz teurer Werkstoffe zu minimieren. Der Schutz der geschäumten Kernschicht erfolgt dadurch, dass die Kernschicht von Hautschichten umgeben und dadurch vor äußeren Einflüssen geschützt ist. Der sandwichartig aufgebaute Mehrschichtbalg wird durch ein Koextrusionsverfahren hergestellt.

Aus der DE 32 36 308 A1 ist ein elastischer Balg bekannt, mit einem mindestens zwei Schichten aufweisenden Schichtaufbau, wobei eine Schicht aus einem weichen Polyvinylchlorid besteht und eine Schicht aus mindestens einem thermoplastischen Elastomer.

Aus der DE 10 2018 214 173 A1 ist ein Faltenbalg für eine Lenkanlage eines Kraftfahrzeugs bekannt. Der Faltenbalg ist als Mehrschichtbalg ausgebildet und umfasst zumindest zwei Schichten aus voneinander abweichenden Materialien. Durch die unterschiedlichen Materialien der Schichten wird eine Funktionstrennung erreicht. Der erste Materialtyp ist hauptsächlich dafür vorgesehen, eine Barriere gegen Feuchtigkeit, Dampf, Gas, Wasser herzustellen (Schutz vor Korrosion) und der zweite Materialtyp hauptsächlich dafür, mechanische Energie (Einschlagenergie von Fremdkörpern), die aus der Umwelt auf das System und somit auf das Material einwirken kann, aufzunehmen. Eine Schicht kann aus einem thermoplastischen Elastomer bestehen, eine andere Schicht zum Beispiel aus faserverstärktem Kunststoff.

Aus der DE 80 01 872 U1 ist ein weiterer Faltenbalg bekannt, der als mehrschichtiger Faltenbalg ausgebildet ist. Die Schichten des Faltenbalgs sind durch eine festhaftende Verbindung miteinander verbunden.

Aus der US 6,386,551 B1 ist ein mehrlagiger Faltenbalg bekannt, der durch ein Koextrusionsverfahren hergestellt ist. Die zur Anwendung gelangenden Schichten bestehen aus unterschiedlichen Materialien.

### Darstellung der Erfindung

Der Erfindung liegt die Aufgabe zugrunde, einen Balg und ein Verfahren zu seiner Herstellung jeweils derart weiterzuentwickeln, dass der Balg eine gute Recyclingfähigkeit aufweist, insbesondere sortenrein recyclebar ist. Außerdem soll der Balg gute Gebrauchseigenschaften während einer langen Gebrauchsdauer aufweisen, besser an die jeweiligen Gegebenheiten des Anwendungsfalles angepasst werden können, und der Balg soll einfach und kostengünstig herstellbarsein.

Außerdem soll eine Verwendung eines solchen Balgs genannt werden.

Diese Aufgabe wird erfindungsgemäß durch die Merkmale der Ansprüche 1, 9 und 10 gelöst. Auf vorteilhafte Ausgestaltungen des Balgs nehmen die auf Anspruch 1 direkt oder indirekt rückbezogenen Ansprüche Bezug.

Zur Lösung der Aufgabe ist ein Balg mit einem zumindest zweischichtigen Aufbau vorgesehen, umfassend zumindest eine erste Schicht und zumindest eine zweite Schicht, die herstellungsbedingt unlösbar miteinander verbunden sind, wobei die Schichten voneinander abweichende Dichten aufweisen und wobei die erste Schicht und die zweite Schicht aus demselben Werkstoff bestehen und wobei der Werkstoff von einer der Schichten ungeschäumt und von einer der Schichten geschäumt ist.

Hierbei ist von Vorteil, dass die unterschiedlichen Schichten des Balgs jeweils funktionstechnisch individualisiert sind. So gelangt zum Beispiel jeder Werkstoff nur für die Schicht zur Anwendung, für die er auch geeignet/erforderlich ist, um gute Gebrauchseigenschaften des Balgs während einer langen Gebrauchsdauer sicherzustellen. Die Verwendung eines zum Beispiel hinsichtlich Preis, Gewicht, Dauerhaltbarkeit überdimensionierten Werkstoffs ist durch den mehrschichtigen Aufbau des Balgs nicht mehr notwendig. Jede Schicht kann so ausgebildet werden, wie es für gute Gebrauchseigenschaften während einer langen Gebrauchsdauer erforderlich ist, unter besonderer Berücksichtigung einer wirtschaftlichen Herstellbarkeit.

Wird eine der Schichten, wie später noch erläutert werden wird, zum Beispiel aus einem Schaumstoff hergestellt, wird dadurch, im Vergleich zu einer Schicht aus einem ungeschäumten Werkstoff, Material eingespart, sodass der Balg insgesamt kostengünstiger und leichter herstellbar ist.

Durch eine solche Ausgestaltung ist die Handhabung des erfindungsgemäßen Balgs im Vergleich zu einem Balg mit einem nur einschichtigen Aufbau unverändert einfach. Insbesondere die Montage und die Demontage des Balgs, ebenso wie die Gebrauchseigenschaften des Balgs während seiner bestimmungsgemäßen Verwendung, unterscheiden sich, wenn nur vorteilhaft, nicht von guten einschichtig aufgebauten Bälgen.

Die Schichten weisen voneinander abweichende Dichten auf. Durch eine solche Ausgestaltung gibt es viele Variationsmöglichkeiten, so dass ein solcher Balg mit einem zumindest zweischichtigen Aufbau besonders gut an die jeweiligen Erfordernisse des Anwendungsfalls angepasst werden kann.

Um das Recycling eines nicht mehr benötigten Balgs möglichst einfach durchführen zu können, ist es vorgesehen, dass die Schichten aus miteinander verträglichen Werkstoffen bestehen. Dies ist auch für eine gute Verbindung der Schichten von Vorteil.

Besonders einfach recycelt werden können Bälge, deren Schichten aus demselben Werkstoff bestehen. Dadurch ist ein sortenreines Recycling möglich. Sinnvoll ist dies insbesondere, wenn zumindest eine der Schichten aus gleichem, aber geschäumtem Material besteht.

Ein Werkstoff, der für die Herstellung von Bälgen in vielen Fällen besonders gut geeignet ist, ist ein TPE-Werkstoff. Bälge aus einem TPE-Werkstoff haben den Vorteil, dass sie im Vergleich zu herkömmlichen thermoplastischen Kunststoffen große Deformationen bei niedrigen Kräften zulassen.

Deshalb ist es bevorzugt vorgesehen, dass die Schichten aus einem TPE-Werkstoff bestehen.

Die erste Schicht und die zweite Schicht bestehen aus demselben Werkstoff, wobei der Werkstoff von einer der Schichten ungeschäumt und von einer der Schichten geschäumt ist.

Für eine ungeschäumte Schicht ist, bei gleicher Dicke, vergleichsweise mehr Werkstoff erforderlich, als für eine geschäumte Schicht. Die ungeschäumte Schicht kann zum Beispiel die Außenschicht des Balgs bilden, die geschäumte Schicht demgegenüber die Innenschicht oder eine der Innenschichten. Die relativ empfindlichere geschäumte Schicht wird durch die ungeschäumte und widerstandsfähigere Außenschicht dann vor äußeren Einflüssen wirksam geschützt.

Die Werkstoffeinsparung durch eine geschäumte Schicht im Vergleich zu einer ungeschäumten Schicht beträgt üblicherweise etwa 30 %, sodass der Balg kostengünstiger herstellbar ist, trotz der Werkstoffeinsparung aber die gleiche geforderte Wandstabilität aufweist. Das wird dadurch erreicht, dass das notwendige Widerstandsmoment einer zum Beispiel massiv-geschäumt-massiv aufgebauten Balgwand bei nur geringfügig erhöhter Wanddicke gleich einer Massiv-Schicht erreicht wird.

Die geschäumte Schicht kann physikalisch oder chemisch geschäumt sein.

Eine physikalisch geschäumte Schicht hat den Vorteil, dass kein Triebmittel eingesetzt werden muss, was in gewisser Weise den Kunststoff kontaminiert. Eine physikalische Schäumung erfolgt dadurch, dass während des Extrudierens in den erschmolzenen Werkstoff ein Gas, zum Beispiel Luft oder Stickstoff, injiziert wird.

Eine chemisch geschäumte Schicht hat den Vorteil, dass das die Gas-Injektionseinheit an der Fertigungsanlage entfällt.

Eine chemisch Schäumung erfolgt dadurch, dass ein Triebmittel dem Kunststoff beigemengt wird.

Außerdem hat ein zumindest zweischichtiger Aufbau, der eine geschäumte Schicht umfasst, im Vergleich zu einem einschichtigen, ungeschäumten Aufbau den technischen Vorteil, dass solche Bälge eine verbesserte thermische Isolation aufweisen und nach wie vor rezyklierbar sind, wenn der Schaum aus dem gleichen Polymer wie die ungeschäumte Schicht besteht. Ein solcher Balg weist außerdem ein reduziertes Gewicht bei gleicher Stabilität auf, ist radial weicher und somit stoß-unempfindlicher und hat ein verbessertes Diffusionsverhalten, sofern geeignete Sperrschichten verwendet werden.

Das verbesserte Diffusionsverhalten ist vorteilhaft, wenn zum Beispiel Fett in dem Balg ist und das Öl des Fetts durch Diffusion und damit dessen Schmiereigenschaften verloren geht. Eine geeignete Sperrschicht verhindert die Diffusion und erhält die Schmiereigenschaften des Fetts.

Wie zuvor bereits beschrieben, kann die erste Schicht aus einem ungeschäumten Werkstoff bestehen und die zweite Schicht aus einem geschäumten Werkstoff. Um die zweite Schicht aus dem geschäumten Werkstoff bestmöglich vor unerwünschten Einflüssen zu schützen, kann es vorgesehen sein, dass die zweite Schicht zwischen der ersten Schicht und einer dritten Schicht sandwichartig angeordnet ist. Die geschäumte zweite Schicht kommt dann mit der inneren und äußeren Umgebung des Balgs nicht mehr in Berührung und ist bestmöglich geschützt.

Die dritte Schicht und die erste Schicht können materialeinheitlich ausgebildet sein.

Am besten recycelbar ist ein Balg, bei dem alle Schichten aus einem übereinstimmenden Werkstoff bestehen, wobei der Werkstoff der ersten und der dritten Schicht bevorzugt ungeschäumt, der Werkstoff der zweiten Schicht demgegenüber bevorzugt geschäumt ist.

Hinsichtlich eines einfachen und prozesssicheren Verfahrens zur Herstellung des Balgs kann es vorgesehen sein, dass die erste Schicht und die dritte Schicht jeweils eine im Wesentlichen konstante Wandstärke aufweisen. Hierbei ist von Vorteil, dass alle Bereiche einer jeweiligen Schicht einfach und frei von herstellungsbedingten Fehlern herstellbar sind und der Balg deshalb gute und vorhersehbare Gebrauchseigenschaften während einer langen Gebrauchsdauer aufweist.

Weiter ist von Vorteil, wenn die erste Schicht und die dritte Schicht im Wesentlichen gleiche Wandstärken aufweisen. Während des Herstellungsprozesses verhalten sich diese Schichten, zum Beispiel bezüglich Verfestigung und/oder Schrumpf, weitestgehend gleich.

Die Wandstärke der zweiten Schicht ist bevorzugt größer als die Wandstärke der ersten und dritten Schicht, wenn die im Allgemeinen teuren Funktionsschichten außen liegen.

Die Wandstärke der zweiten Schicht ist bevorzugt kleiner als die äußeren, wenn sie eine hohe Festigkeit und einen höheren E-Modul hat als die äußeren Schichten. Sie hat dann einen die Festigkeit erhöhenden Charakter und beeinträchtigt die Flexibilität geringst möglich. Das gleiche gilt für Sperrschichten, die die Permeabilität verringern, wenn deren Werkstoff einen höheren E-Modul aufweist.

Für die meisten Anwendungsfälle, zum Beispiel im Bereich Kraftfahrzeug, haben die Schichten Wandstärken, die 0,3 mm bis 3 mm betragen.

Sind die Wandstärken dünner, ist die Haltbarkeit des Balgs während seiner bestimmungsgemäßen Verwendung eingeschränkt, sind die Wandstärken demgegenüber dicker, weist der Balg häufig nicht mehr die erforderliche Nachgiebigkeit auf.

Besonders vorteilhaft ist die Verwendung eines Balgs mit mehrschichtigem Aufbau als Achs- oder Lenkungsmanschette eines Kraftfahrzeugs. Besonders vorteilhaft deshalb, weil durch den mehrschichtigen Aufbau der Balg Schichten mit unterschiedlichen Eigenschaften erhalten kann und so die technischen Anforderungen bestmöglich erfüllt werden können. Die technischen Anforderungen sind geringes Gewicht, gute Wärmeisolierung, geringe Reibung, geringe Geräuschbildung, geringe Öl-Permeabilität, erhöhte Lebensdauer.

Die genannten Vorteile können auch für andere Verwendungen von Vorteil sein, zum Beispiel für einen Balg für ein Lenkgetriebe eines Kraftfahrzeugs, einen Schutzbalg für ein Federbein eines Kraftfahrzeugs oder einen Anschlagbalg extern oder intern eines Federbeins eines Kraftfahrzeugs.

Der Balg kann zusätzlich einen im Wesentlichen zylindrischen Bereich zur Stabilitätserhöhung aufweisen.

Außerdem betrifft die Erfindung ein Verfahren zur Herstellung eines Balgs mit einem zumindest zweischichtigen Aufbau, umfassend zumindest eine erste Schicht und zumindest eine zweite Schicht, wobei alle Schichten in einem gemeinsamen Coextrusionswerkzeug zeitgleich durch Coextrusion hergestellt und herstellungsbedingt zum Balg zusammengeführt und in Verbindung mit der bereits als vorteilhaft genannten Werkstoffverträglichkeit dadurch unlösbar miteinander verbunden werden. Das Coextrudieren ist im Wesentlichen genauso einfach durchführbar wie das Extrusionsblasformen eines einwandigen Bauteils. Aufgeschmolzenes Polymer wird über eine Förderschnecke durch Düsen gepresst, sodass ein schlauchförmiges Halbzeug entsteht. Dieses schlauchförmige Halbzeug wird anschließend in einer Blasform aufgeblasen und dadurch an die Innenkontur der Blasform angepasst.

### Kurzbeschreibung der Zeichnung

Ein Ausführungsbeispiel eines erfindungsgemäßen Balgs wird nachfolgend anhand der Figuren 1 bis 3 näher erläutert.

Diese zeigen jeweils in schematischer Darstellung:
- Figur 1: eine perspektivische Ansicht eines gebrauchsfertigen, dreischichtigen Balgs,
- Figur 1a: den Balg aus Figur 1 mit einem herausgetrennten Ausschnitt, um den mehrschichtigen Aufbau besser zeigen zu können,
- Figur 2: einen vergrößerten Schnitt durch den dreischichtigen Balg aus Figur 1,
- Figur 3: einen weiter vergrößerten Ausschnitt aus dem Balg gemäß Figur 2.

### Ausführung der Erfindung

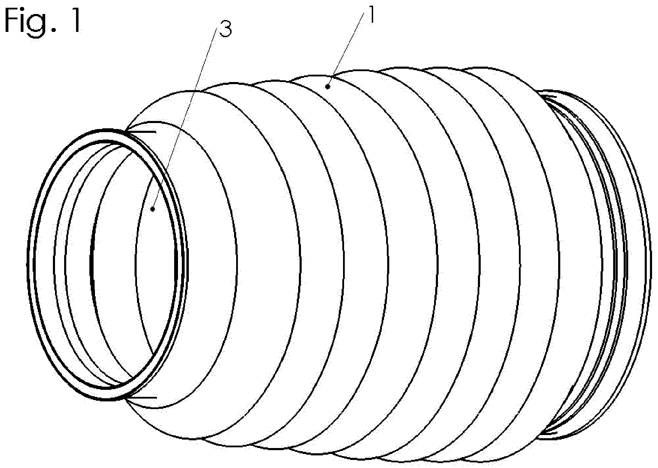

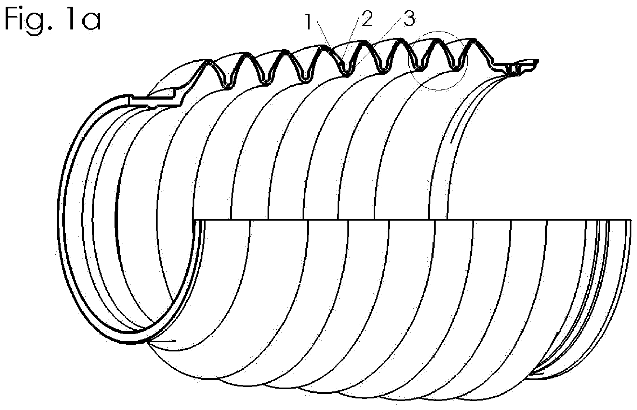

In den Figuren 1 bis 3 ist ein Ausführungsbeispiel eines erfindungsgemäßen Balgs gezeigt, der einen dreischichtigen Aufbau mit einer ersten 1, zweiten 2 und dritten Schicht 3 aufweist.

Figur 1 zeigt eine perspektivische Ansicht des Balgs. Der Balg gelangt als Achsmanschette in einem Kraftfahrzeug zur Anwendung und ist als Faltenbalg ausgebildet.

In Figur 1a ist der Balg aus Figur 1 mit einem herausgetrennten 90° Ausschnitt gezeigt. Dadurch ist der mehrschichtige Aufbau des Balgs zu sehen.

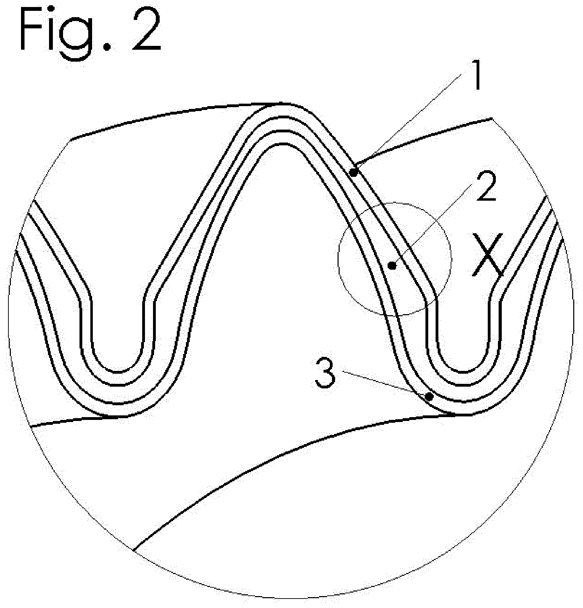

In Figur 2 ist ein Schnitt durch eine Falte des Faltenbalgs aus Figur 1 gezeigt. Der Balg hat einen dreischichtigen Aufbau und umfasst die erste 1, die zweite 2 und die dritte Schicht 3. Alle drei Schichten 1, 2, 3 sind herstellungsbedingt unlösbar miteinander verbunden und bestehen aus einem übereinstimmenden TPE-Werkstoff.

Durch die materialeinheitliche Ausgestaltung des Balgs ist dieser problemlos und sortenrein recyclebar.

Die erste Schicht 1 und die dritte Schicht 3 sind auf den einander abgewandten Seiten der zweiten Schicht 2 angeordnet, wobei der Balg sandwichartig aufgebaut ist. Die mittlere zweite Schicht 2 besteht aus einem geschäumten Werkstoff, während die erste Schicht 1 und die dritte Schicht 3 aus einem ungeschäumten Werkstoff bestehen. Die zweite Schicht 2 weist dadurch eine geringere Dichte als die beiden benachbarten Schichten 1, 3 auf.

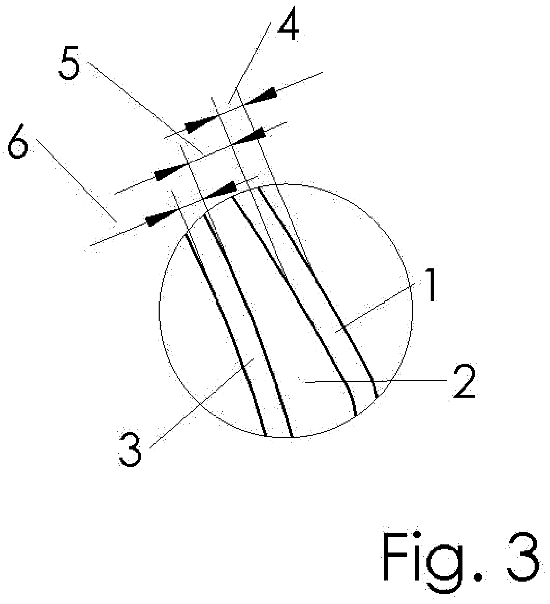

In Figur 3 ist der Ausschnitt "X" aus Figur 2 vergrößert dargestellt.

Im gezeigten Ausführungsbeispiel weist jede Schicht 1, 2, 3 jeweils eine im Wesentlichen konstante Wandstärke 4, 5, 6 auf, wobei außerdem alle Schichten 1, 2, 3 im Wesentlichen gleiche Wandstärken 4, 5, 6 aufweisen. Durch die im Wesentlichen konstanten Wandstärken einer jeden Schicht und dadurch, dass alle Schichten im Wesentlichen gleiche Wandstärken 4, 5, 6 haben, ist der Balg durch Coextrusion einfach und prozesssicher herstellbar.

Insbesondere die geschäumte zweite Schicht 2 ist von hervorzuhebendem Vorteil. Durch die vergleichsweise geringe Dichte wird, bezogen auf die beiden angrenzenden Schichten 1, 3, Werkstoff eingespart, sodass der gezeigte Balg kostengünstig herstellbar und leicht ist.

## Patentansprüche

1. Balg mit einem zumindest zweischichtigen Aufbau, umfassend zumindest eine erste Schicht (1) und zumindest eine zweite Schicht (2), die herstellungsbedingt unlösbar miteinander verbunden sind, wobei die Schichten (1, 2) voneinander abweichende Dichten aufweisen, **dadurch gekennzeichnet, dass** die erste Schicht (1) und die zweite Schicht (2) aus demselben Werkstoff bestehen und dass der Werkstoff von einer der Schichten (1, 2) ungeschäumt und von einer der Schichten (2, 1) geschäumt ist.

2. Balg nach Anspruch 1, **dadurch gekennzeichnet, dass** die erste Schicht (1) aus einem ungeschäumten Werkstoff besteht, dass die zweite Schicht (2) aus einem geschäumten Werkstoff besteht und dass die zweite Schicht (2) zwischen der ersten Schicht (1) und einer dritten Schicht (3) sandwichartig angeordnet ist.

3. Balg nach Anspruch 2, **dadurch gekennzeichnet, dass** die dritte Schicht (3) materialeinheitlich mit der ersten Schicht (1) ausgebildet ist.

4. Balg nach einem der Ansprüche 2 oder 3, **dadurch gekennzeichnet, dass** die erste Schicht (1) und die dritte Schicht (3) jeweils eine im Wesentlichen konstante Wandstärke (4, 6) aufweisen.

5. Balg nach einem der Ansprüche 2 bis 4, **dadurch gekennzeichnet, dass** die erste Schicht (1) und die dritte Schicht (3) im Wesentlichen gleiche Wandstärken (4, 6) aufweisen.

6. Balg nach einem der Ansprüche 2 bis 5, **dadurch gekennzeichnet, dass** die Wandstärke (5) der zweiten Schicht (2) größer als die Wandstärken (4, 6) der ersten Schicht (1) und der dritten Schicht (3) ist.

7. Balg nach einem der Ansprüche 4 bis 6, **dadurch gekennzeichnet, dass** die Wandstärken (4, 5, 6) jeweils 0,3 mm bis 3 mm betragen.

8. Balg nach einem der Ansprüche 1 bis 7, **dadurch gekennzeichnet, dass** die erste (1) und die zweite Schicht (2) aus einem TPE-Werkstoff bestehen.

9. Verwendung eines Balgs nach einem der Ansprüche 1 bis 8 als Achs- oder Lenkungsmanschette eines Kraftfahrzeugs.

10. Verfahren zur Herstellung eines Balgs nach einem der Ansprüche 1 bis 8 mit einem zumindest zweischichtigen Aufbau, umfassend zumindest eine erste Schicht (1) und zumindest eine zweite Schicht (2), **dadurch gekennzeichnet, dass** alle Schichten (1, 2, 3) in einem gemeinsamen Coextrusionswerkzeug zeitgleich durch Coextrusion hergestellt und herstellungsbedingt zum Balg zusammengeführt und dadurch unlösbar miteinander verbunden werden.

## Claims

1. Bellows having an at least two-layer construction, comprising at least a first layer (1) and at least a second layer (2), which are connected to one another in a non-releasable manner as a result of their production, wherein the layers (1, 2) have densities that differ from one another, **characterized in that** the first layer (1) and the second layer (2) consist of the same material, and **in that** the material of one of the layers (1, 2) is unfoamed and the material of one of the layers (2, 1) is foamed.

2. Bellows according to Claim 1, **characterized in that** the first layer (1) consists of an unfoamed material, **in that** the second layer (2) consists of a foamed material, and **in that** the second layer (2) is arranged between the first layer (1) and a third layer (3) in a sandwich-like manner.

3. Bellows according to Claim 2, **characterized in that** the third layer (3) is formed in a materially uniform manner with the first layer (1).

4. Bellows according to one of Claims 2 or 3, **characterized in that** the first layer (1) and the third layer (3) each have a substantially constant wall thickness (4, 6).

5. Bellows according to one of Claims 2 to 4, **characterized in that** the first layer (1) and the third layer (3) have substantially identical wall thicknesses (4, 6) .

6. Bellows according to one of Claims 2 to 5, **characterized in that** the wall thickness (5) of the second layer (2) is greater than the wall thicknesses (4, 6) of the first layer (1) and of the third layer (3).

7. Bellows according to one of Claims 4 to 6, **characterized in that** the wall thicknesses (4, 5, 6) are each 0.3 mm to 3 mm.

8. Bellows according to one of Claims 1 to 7, **characterized in that** the first layer (1) and the second layer (2) consist of a TPE material.

9. Use of a bellows according to one of Claims 1 to 8 as an axle boot or steering rack boot of a motor vehicle.

10. Method for producing a bellows according to one of Claims 1 to 8 having an at least two-layer construction, comprising at least a first layer (1) and at least a second layer (2), **characterized in that** all the layers (1, 2, 3) are produced at the same time in a common coextrusion tool by coextrusion and are joined together to form the bellows as a result of their production and are thereby connected to one another in a non-releasable manner.

## Revendications

1. Soufflet avec une structure au moins bicouche, comprenant au moins une première couche (1) et au moins une deuxième couche (2), qui sont reliées entre elles de manière indissociable en raison de la fabrication, les couches (1, 2) présentant des densités différentes l'une de l'autre, **caractérisé en ce que** la première couche (1) et la deuxième couche (2) sont constituées du même matériau et **en ce que** le matériau de l'une des couches (1, 2) est non expansé et celui de l'une des couches (2, 1) est expansé.

2. Soufflet selon la revendication 1, **caractérisé en ce que** la première couche (1) est constituée d'un matériau non expansé, **en ce que** la deuxième couche (2) est constituée d'un matériau expansé et **en ce que** la deuxième couche (2) est agencée en sandwich entre la première couche (1) et une troisième couche (3).

3. Soufflet selon la revendication 2, **caractérisé en ce que** la troisième couche (3) est réalisée dans le même matériau que la première couche (1).

4. Soufflet selon l'une quelconque des revendications 2 ou 3, **caractérisé en ce que** la première couche (1) et la troisième couche (3) présentent respectivement une épaisseur de paroi (4, 6) essentiellement constante.

5. Soufflet selon l'une quelconque des revendications 2 à 4, **caractérisé en ce que** la première couche (1) et la troisième couche (3) présentent des épaisseurs de paroi (4, 6) essentiellement identiques.

6. Soufflet selon l'une quelconque des revendications 2 à 5, **caractérisé en ce que** l'épaisseur de paroi (5) de la deuxième couche (2) est supérieure aux épaisseurs de paroi (4, 6) de la première couche (1) et de la troisième couche (3).

7. Soufflet selon l'une quelconque des revendications 4 à 6, **caractérisé en ce que** les épaisseurs de paroi (4, 5, 6) sont respectivement de 0,3 mm à 3 mm.

8. Soufflet selon l'une quelconque des revendications 1 à 7, **caractérisé en ce que** la première (1) et la deuxième (2) couche sont constituées d'un matériau TPE.

9. Utilisation d'un soufflet selon l'une quelconque des revendications 1 à 8 en tant que manchon d'essieu ou de direction d'un véhicule automobile.

10. Procédé de fabrication d'un soufflet selon l'une quelconque des revendications 1 à 8 avec une structure au moins bicouche, comprenant au moins une première couche (1) et au moins une deuxième couche (2), **caractérisé en ce que** toutes les couches (1, 2, 3) sont fabriquées simultanément par coextrusion dans un outil de coextrusion commun et sont assemblées en soufflet en raison de la fabrication et sont ainsi reliées entre elles de manière indissociable.
